# EUROPÄISCHE PATENTSCHRIFT

(11) **EP 2 533 965 B1**
(45) Veröffentlichungstag und Bekanntmachung des Hinweises auf die Patenterteilung: **26.08.2020**
(21) Anmeldenummer: 11710408.3
(22) Anmeldetag: 17.01.2011
(51) Int. Cl.: B29C 49/66, B29C 49/06, B29C 49/12, B29C 49/60

(54) **VERFAHREN UND VORRICHTUNG ZUR BLASFORMUNG VON BEHÄLTERN**
METHOD AND DEVICE FOR BLOW-MOLDING CONTAINERS
PROCÉDÉ ET DISPOSITIF DE MOULAGE DE RÉCIPIENTS PAR SOUFFLAGE

(30) Priorität: 08.02.2010 DE 102010007542
(43) Veröffentlichungstag der Anmeldung: 19.12.2012
(73) Patentinhaber: KHS Corpoplast GmbH, 22145 Hamburg (DE)
(72) Erfinder: GODAU, Günther, 22145 Hamburg (DE); LINKE, Michael, 22159 Hamburg (DE); KLATT, Dieter, 22147 Hamburg (DE); LITZENBERG, Michael, 21502 Geesthacht (DE); BALKAU, Karl-Heinz, 22113 Oststeinbek (DE)
(74) Vertreter: Hausfeld, Norbert
(86) Internationale Anmeldenummer: PCT/DE2011/000047
(87) Internationale Veröffentlichungsnummer: WO 2011/095151

(56) Entgegenhaltungen:
- DE-A1-102006 032 140
- DE-C1- 4 325 559
- DE-U1-202004 021 477
- FR-A1- 2 921 293

## Beschreibung

Die Erfindung betrifft ein Verfahren zur Blasformung von Behältern, bei dem ein Vorformling nach einer thermischen Konditionierung innerhalb einer im Bereich einer Blasstation angeordneten Blasform durch Blasdruckeinwirkung in den Behälter umgeformt wird sowie bei dem Blasgas durch ein Anschlußelement hindurch in einen Innenraum des Vorformlings eingeleitet wird und bei dem nach der Blasformung ein Spülgas durch den Innenraum des Behälters hindurchgeleitet wird und bei dem eine Mehrzahl von Blasstationen verwendet werden.

Die Erfindung betrifft darüber hinaus eine Vorrichtung zur Blasformung von Behältern, die mindestens zwei Blasstationen mit mindestens jeweils einer Blasform aufweist, sowie bei der sich ein Strömungsweg für ein Blasgas zur Blasformung der Behälter durch ein Anschlußelement hindurch erstreckt und bei der die Blasstationen an eine Einrichtung zur Zuführung eines Spülgases angeschlossen sind.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Insbesondere bei der Herstellung von Behältern, die für eine Abfüllung von heißen Flüssigkeiten vorgesehen sind, werden Blasformen verwendet, die eine Temperatur oberhalb einer Umgebungstemperatur aufweisen. Diese heißen Blasformen haben zur Folge, dass eine Verfestigung des Materials der geblasenen Behälter nur relativ langsam erfolgt. Nach der Durchführung des Blasvorganges wird bei derartigen Herstellungsverfahren deshalb häufig ein Spülgas in den Behälter eingeleitet, das eine Abkühlung der Behälterwandungen verursacht und hierdurch eine schnellere Entnahme der fertigen Behälter aus der Blasform unterstützt.

Die Zuführung einer derartigen Spülluft kann beispielsweise durch eine hohle Reckstange hindurch erfolgen, die mit entsprechenden Ausströmöffnungen versehen ist. Grundsätzlich sind aber auch andere Varianten zur Zuführung des Spülgases möglich. Zur Steuerung der Zuführung des Spülgases werden üblicherweise spezielle Leitungen und Ventilverschaltungen verwendet. Darüber hinaus wird häufig für das Spülgas ein Druckniveau vorgegeben, das weder einem üblichen niedrigen Vorblasdruck noch einem höheren Hauptblasdruck entspricht. Das entsprechende Druckniveau muss somit entweder über Druckregler separat bereitgestellt werden oder zusätzlich zu den anderen Drücken separat zugeführt werden. Die gerätetechnische Bereitstellung des Spülgases erfordert somit gegenüber einer Standardmaschine erhebliche Umbauten, bzw. es müssen komplette auf die jeweilige Anwendung spezialisierte Steuereinheiten bereitgestellt werden.

Aus der FR 2 921 293 A1 und aus der DE 20 2004 021 477 U1 ist jeweils ein gattungsgemäßes Verfahren zur Blasformung von Behältern bekannt. Die Zuführung des Spülgases erfolgt jeweils aus einer zentralen Druckgasquelle. DE102006032140 A1 offenbart ein Verfahren zur Blasformung von Behältern gemäß dem Oberbegriff des Anspruchs 1.

Aufgabe der vorliegenden Erfindung ist es daher, ein Verfahren der einleitend genannten Art derart zu verbessern, dass eine vereinfachte gerätetechnische Realisierung unterstützt wird.

Diese Aufgabe wird durch die Merkmale des Anspruchs 1 und die Merkmale des Anspruchs 8 gelöst.

Weitere Aufgabe der vorliegenden Erfindung ist es, eine Vorrichtung der einleitend genannten Art derart zu konstruieren, dass ein vereinfachter konstruktiver Aufbau unterstützt wird.

Diese Aufgabe wird erfindungsgemäß dadurch gelöst, dass mindestens eine der Blasstationen mit einem nur dieser Blasstation zugeordneten Speicher für mindestens einen Teil des Spülgases verbunden ist.

Die Zuordnung jeweils eines individuellen Speichers zu jeder Blasstation ermöglicht einen sehr modularen Aufbau der Blaseinrichtung. Insbesondere ist es möglich, die Blaseinrichtung weitgehend entsprechend einem Grundstandard zu konstruieren und nur für den Fall, dass eine Bereitstellung von Spülgas erforderlich ist, diese Grundkonstruktion mit den zusätzlich benötigten Bauteilen zu ergänzen. Dies erleichtert sowohl eine Erstmontage als auch eine eventuelle Nachrüstung einer Standardmaschine.

Durch die Zuordnung eines individuellen Speichers zu jeder Blasstation werden darüber hinaus komplexe Verschaltungen oder Verkopplungen der Blasstationen vermieden.

Eine separate Steuerung für die Füllung des Speichers wird dadurch vermieden, dass eine mindestens teilweise Befüllung des Speichervolumens mit dem Spülgas während der Durchführung des Blasvorganges durchgeführt wird.

Eine besonders einfache konstruktive Realisierung wird dadurch unterstützt, dass die Befüllung des Speichervolumens mindestens teilweise durch eine Strömungsverbindung des Speichervolumens mit einem Innenraum des Behälters hindurch erfolgt.

Eine einfache Kühlmöglichkeit für den Speicher wird dadurch erreicht, dass mindestens ein Teil des Speichervolumens über ein Einlaßventil mit Druckgas gefüllt wird.

Eine gesteuerte Befüllung und Entleerung des Speichers wird dadurch unterstützt, dass sowohl eine Einspeisung von Druckgas in das Speichervolumen als auch eine Ableitung von Druckgas aus dem Speichervolumen über jeweils mindestens ein Ventil gesteuert wird.

Bewegliche Zuführungselemente können dadurch vermieden werden, dass das Spülgas seitlich durch eine Wandung einer Reckstange hindurch in einen Innenraum der Reckstange eingeleitet wird.

Eine vereinfachte Ausführungsform wird dadurch bereitgestellt, dass das Spülgas der Reckstange unter Verwendung eines Schlauches zugeführt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung einer Ausführungsform mit einem Speicher für das Spülgas ohne Ventilverschaltung,
- Fig. 6: eine gegenüber Fig. 5 abgewandelte Ausführungsform mit einem zusätzlichen Zuführventil für Spülgas,
- Fig. 7: eine nochmals abgewandelte Ausführungsform mit einem weiteren Ventil zur Steuerung der Abgabe des Spülgases,
- Fig. 8: eine nochmals abgewandelte Ausführungsform, bei der der Speicher und die Reckstange über einen flexiblen Schlauch miteinander verbunden sind,
- Fig. 9: eine Abwandlung zur Ausführungsform in Figur 8 mit einer veränderten Anordnung des Steuerventils,
- Fig. 10: eine weitere Abwandlung zu den Ausführungsformen in Fig. 8 und Fig. 9 mit einer Verwendung von Ventilen sowohl im Bereich eines Einganges als auch eines Ausganges des Speichers und
- Fig. 11: eine schematische Darstellung zur pneumatischen Realisierung einer weiteren Ausführungsform unter Verwendung von verbrauchter Blasluft zur Durchführung des Spülvorganges.

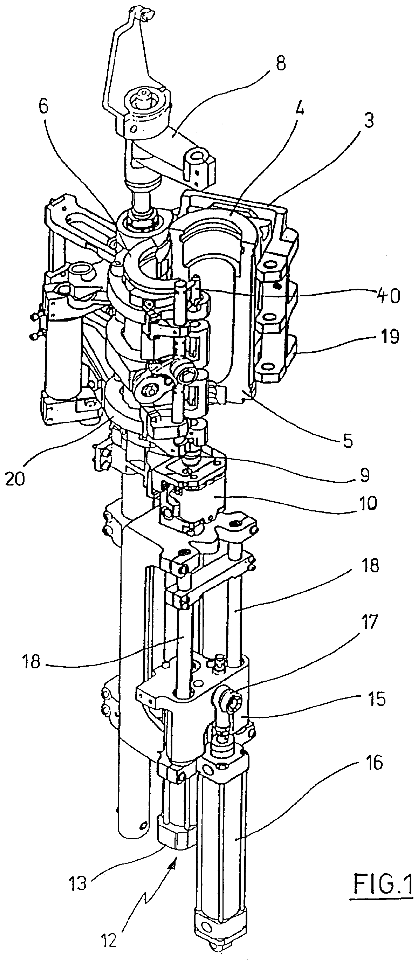

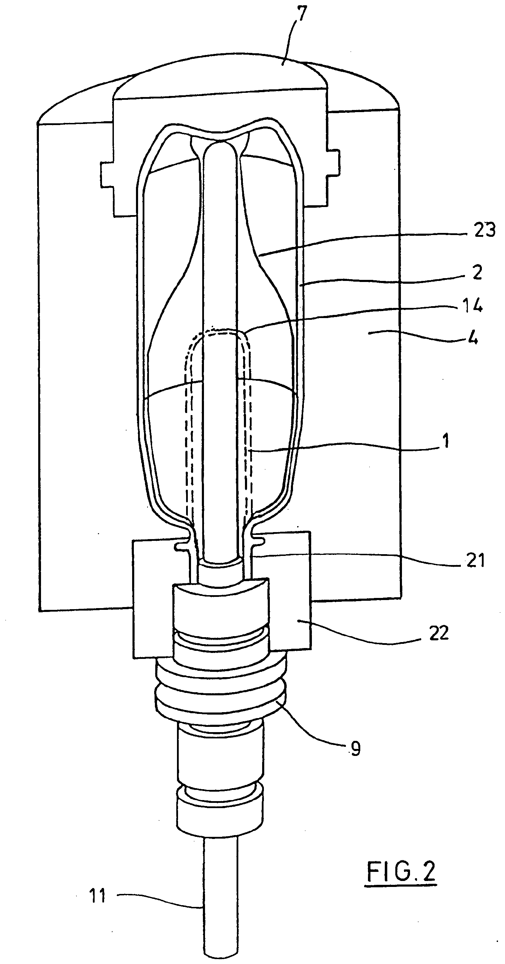

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durch-führung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

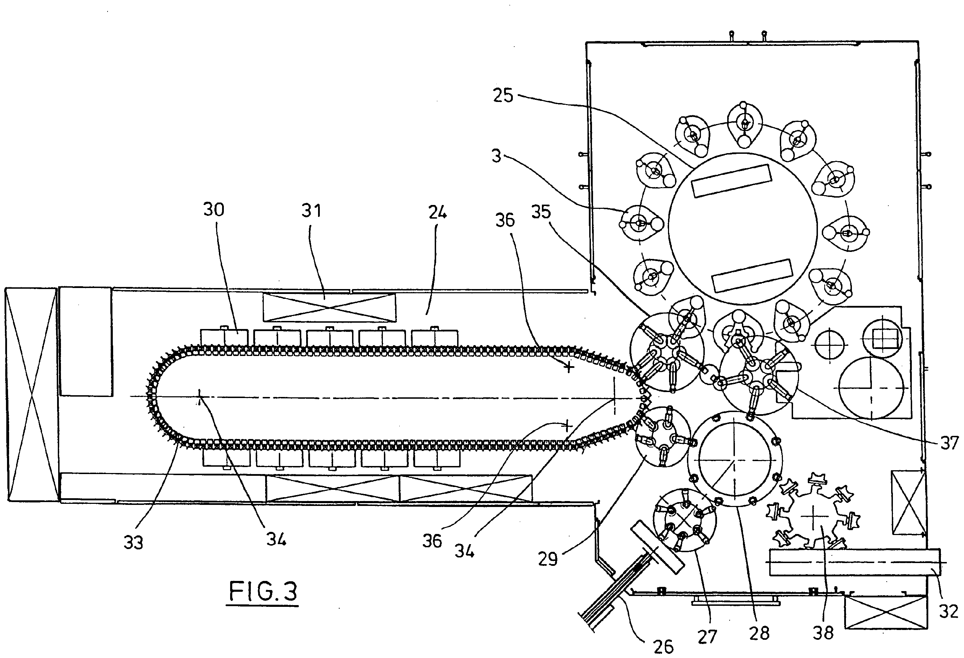

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

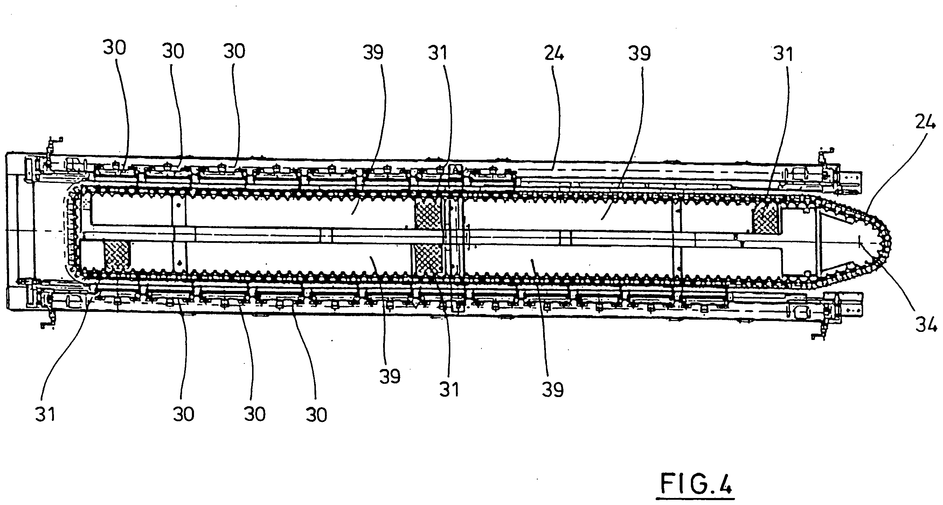

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

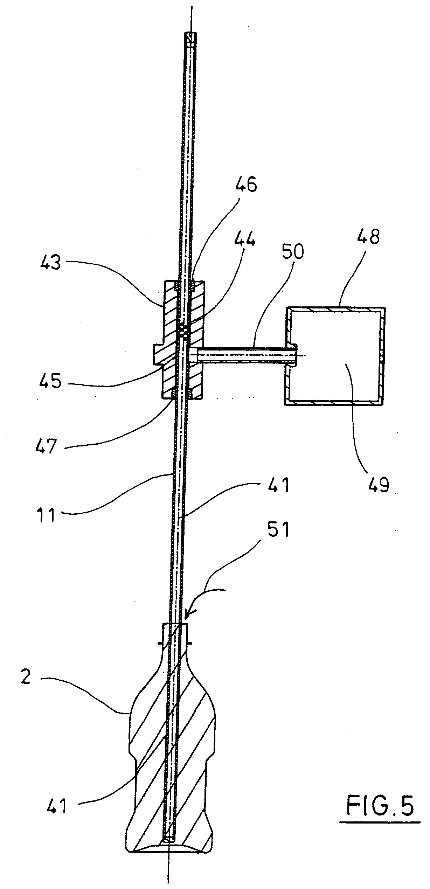

Fig. 5 zeigt einen fertig geblasenen Behälter (2), in den die Reckstange (11) eingeführt ist. Die Reckstange (11) ist mindestens abschnittsweise hohl ausgebildet und weist einen Innenraum (41) auf. Im Bereich ihrer in den Behälter (2) eingeführten Ausdehnung weist die Reckstange (11) mindestens eine Ausströmöffnung (42), vorzugsweise eine Mehrzahl von Ausströmöffnungen (42), auf. Die Reckstange (11) erstreckt sich durch ein Führungselement (43) hindurch. Bei der in Fig. 5 dargestellten Ausführungsform weist die Reckstange (11) Einströmöffnungen (44) auf, die bei der dargestellten Positionierung im Bereich eines Innenraumes (45) des Führungselementes (43) angeordnet sind. Der Innenraum (45) ist über Dichtungen (46, 47) gegenüber einer Umgebung abgedichtet.

Mit dem Innenraum (45) des Führungselementes (43) ist ein Speicher (48) verbunden, der einen Innenraum (49) aufweist. Bei dem in Fig. 5 dargestellten Ausführungsbeispiel ist der Speicher (48) über ein rohrförmiges Distanzelement (50) mit dem Führungselement (43) verbunden.

Gemäß dem in Fig. 5 dargestellten Ausführungsbeispiel ist vorgesehen, dass die für eine Formung des Behälters (2) benötigte Blasluft durch einen die Reckstange (11) umgebenden Ringspalt in den Innenraum des Behälters (2) bzw. des Vorformlings (1) zugeführt wird. Während der Formung des Behälters (2) strömt die Blasluft durch die Ausströmöffnungen (42) in den Innenraum (41) der Reckstange (11) hinein und gelangt über die Einströmöffnungen (44) und den Innenraum (45) bis in den Bereich des Innenraumes (49) des Speichers (48). Der Speicher (48) wird hierdurch mit einer durch das Speichervolumen exakt vorgegebenen Menge an Druckluft gefüllt, die einen Druck aufweist, der etwa dem maximalen Blasdruck entspricht.

Nach einem Ende des Blasvorganges und einer Druckabsenkung im Bereich des Behälters (2) strömt diese Druckluft als Spülgas aus dem Speicher (48) heraus und tritt über die Ausströmöffnungen (42) der Reckstange (11) in den Innenraum des Behälters (2) über. Hierdurch wird der Spülvorgang und insbesondere die Abkühlung der Wandungen des Behälters (2) verursacht.

Aus Fig. 5 ist insbesondere das äußerst einfache Konstruktionsprinzip zu erkennen. Das Führungselement (43) braucht lediglich mit dem Speicher (48) gekoppelt zu werden, um die Funktion der Bereitstellung des Spülgases zu implementieren. Während eines Betriebes sind keinerlei Steuerfunktionen erforderlich, da sich das System eigenständig steuert.

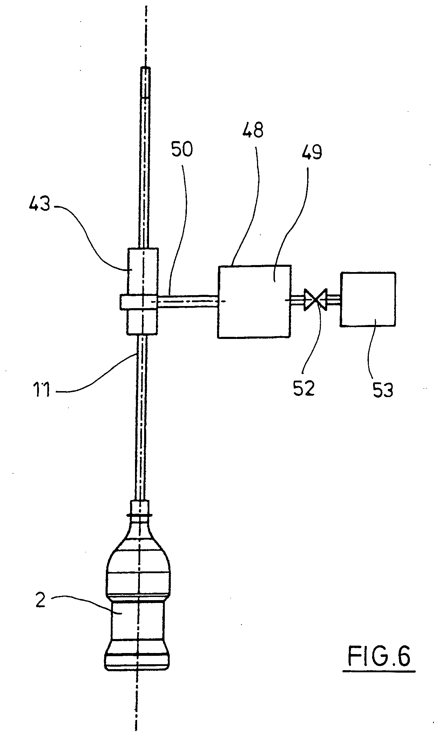

Bei einer Ausführungsvariante, bei der das Blasgas nicht über den Ringspalt (51), sondern über den Innenraum (41) der Reckstange (11) zugeführt wird, ist es lediglich erforderlich, das Führungselement (43) mit einem zusätzlichen Anschluß für die Zuführung des Blasgases zu versehen. Ansonsten ist die gleiche Funktionalität gegeben. Fig. 6 zeigt eine gegenüber Fig. 5 abgewandelte Ausführungsform, bei der der Speicher (48) zusätzlich über ein Einlaßventil (52) mit einer Druckgasquelle (53) gekoppelt. Typischerweise ist die Druckgasquelle (53) identisch zur Druckgasquelle für den höheren Blasdruck. Es ist aber auch möglich, mindestens einen Teil der benötigten Spülluft durch verbrauchte Blasluft bereitzustellen.

Über das Einlaßventil (52) ist es möglich, bereits komprimiertes Druckgas in den Speicher (48) einzuleiten, das sich in der Regel bei der Einströmung in den Speicher (48) teilweise dekomprimiert. Die Dekompression führt zu einer Abkühlung des Gases und es kann hierdurch eine Kühlung des Speichers (48) vorgegeben werden. Darüber hinaus ist es unter Verwendung des Einlaßventils (52) möglich, bedarfsabhängig eine größere Menge an Spülgas bereitzustellen, als durch den Innenraum (45) des Speichers (48) vorgegeben ist. Erfindungsgemäß wird ein Speicher (48) für das Speichervolumen über ein separates Kühlmedium gekühlt.

Beispielsweise kann ein metallisches Gehäuse des Speichers (48) mit Kühlkanälen für ein kühlendes Fluid, beispielsweise Wasser, versehen sein.

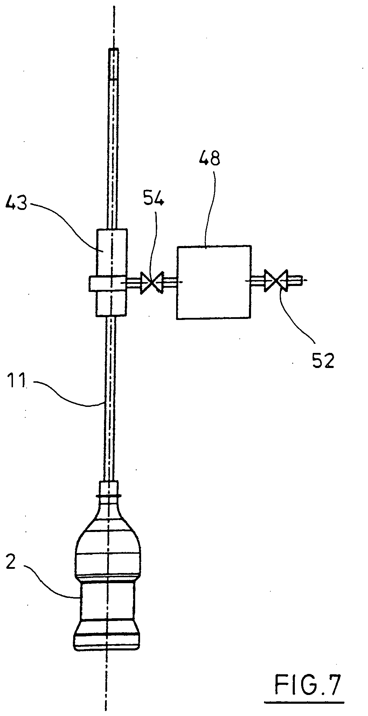

Gemäß der Ausführungsform in Fig. 7 wird zusätzlich zum Einlaßventil (52) auch noch ein Auslaßventil (54) im Bereich des Speichers (48) angeordnet. Das Auslaßventil (54) ermöglicht die Zudosierung einer exakt vorgegebenen Menge an Spülgas auch bei Verwendung eines Einlaßventils (52). Es kann hierdurch insbesondere die Bereitstellung einer zu großen Menge an Spülgas vermieden werden, die zu unnötigen Kosten führen würde.

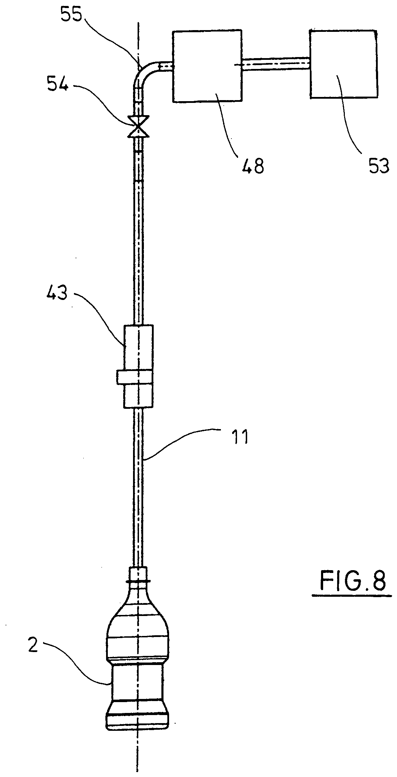

Fig. 8 zeigt eine Ausführungsform, bei der die Spülluft dem Innenraum (41) der Reckstange (11) nicht unter Verwendung des Führungselements (43) zugeführt wird, sondern bei der der Speicher (48) über einen Schlauch (55) mit der Reckstange (11) verbunden ist. Typischerweise wird der Schlauch (55) mit einem dem Behälter (2) abgewandten Ende der Reckstange (11) verbunden.

Fig. 8 zeigt eine Ausführungsform, bei der der Speicher (48) nur mit einem Auslaßventil (54) versehen ist. Das Auslaßventil ist bei dieser Ausführungsform zwischen dem Schlauch (55) und der Reckstange (11) angeordnet. Gemäß einem weiteren nicht dargestellten Ausführungsbeispiel wäre es möglich, statt des Auslaßventils (54) ein Einlaßventil (52) mit dem Speicher (48) zu koppeln.

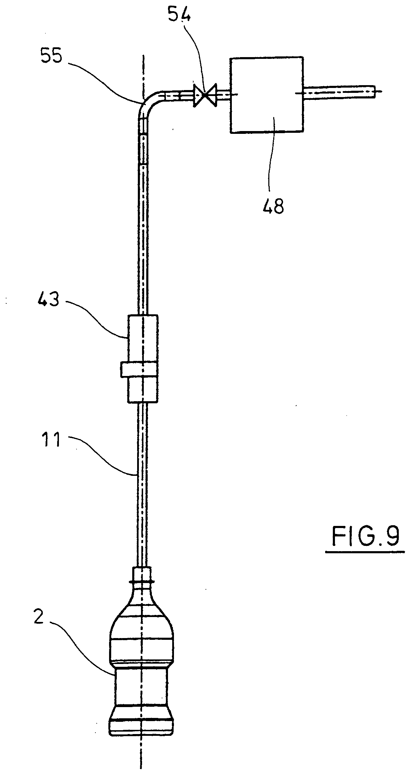

Gemäß der Ausführungsvariante in Fig. 9 wurde das Auslaßventil (54) gemäß Fig. 8 hinsichtlich seiner Positionierung derart verändert, dass es nunmehr zwischen dem Schlauch (55) und dem Speicher (48) angeordnet ist. Eine derartige Anordnung vermeidet die Notwendigkeit einer Positionierung des Auslaßventils (54) gemeinsam mit der Reckstange (11). Das Auslaßventil (54) ist somit bei dieser Ausführungsform relativ zum Speicher (48) unbeweglich angeordnet.

Eine für die entsprechende Prozeßdurchführung vorbereitete Blasstation (3) besitzt typischerweise die eigentlichen Formhälften (5, 6) sowie zwischen den Formhälften (5, 6) und den Trägern (19, 20) angeordnete Außenschalen. Temperiermittelkanäle oder Heizelemente sind vorzugsweise im Bereich dieser Außenschalen angeordnet, um eine einfache Auswechselbarkeit der Formhälften (5, 6) bei einem Produktwechsel zu unterstützen. Gemäß einem Ausführungsbeispiel werden zur Herstellung von heiß abfüllbaren Behältern (2) die Außenschalen auf eine Temperatur von etwa 120° C beheizt. Die Bodenform und den Mündungsabschnitt (21) umgebende Bauteile werden hingegen auf eine Temperatur von 12-14° C gekühlt. Durch die Verwendung der Kühlung des geblasenen Behälters (2) durch die Spülluft braucht lediglich das Temperiermedium für die Erhitzung der Formhälften (5, 6) und für die Kühlung der anderen Bauteile zugeführt zu werden. Es ist hingegen nicht die Zuführung eines dritten Temperiermediums in flüssiger Form erforderlich.

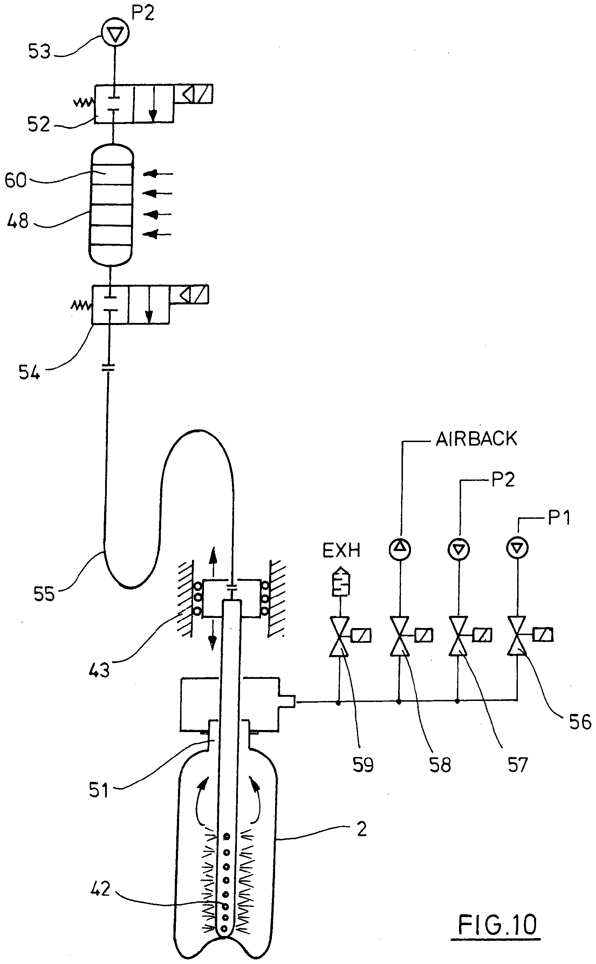

Fig. 10 zeigt eine Ausführungsform ähnlich zu den Ausführungsformen in Fig. 7 bis Fig. 9. In stärkerer Detailliertheit ist hier beispielsweise die Zuführung der Blasdrücke veranschaulicht. Über ein Vordruckventil (56) erfolgt die Zuführung eines ersten Vorblasdruckes P1 mit einem Druckniveau von 3 bar bis 20 bar, über ein Hauptdruckventil (57) erfolgt die Zuführung eines Hauptblasdruckes P2 mit einem Druck von typischerweise 20 bar bis 40 bar. Die Rückführung verbrauchter Blasluft wird über ein Rückführventil (58) unterstützt. Ein Ablassen nicht mehr benötigter Blasluft, die weder über das Rückführventil (58) abgeleitet noch dem Speicher (48) zugeführt wird, ist über ein Entlüftungsventil (59) möglich.

Der Speicher (48) ist bei dieser Ausführungsform sowohl mit einem Einlaßventil (52) als auch mit einem Auslaßventil (54) versehen. Gegebenenfalls kann bei der Verwendung sowohl des Einlaßventils (52) als auch des Auslaßventils (54) auch vollständig auf eine Speisung des Speichers (48) mit aus dem Innenraum des Behälters (2) wieder herausströmender Blasluft verzichtet werden. Anwendungsabhängig kann somit unter Verwendung der Druckgasquelle (53) eine Bereitstellung der erforderlichen Menge an Spülgas mit einem Anteil von 0 bis 100% erfolgen.

Fig. 10 veranschaulicht darüber hinaus eine Ausführungsvariante, bei der der Speicher (48) aus einzelnen Speichersegmenten (60) besteht. Die Speichersegmente (60) sind individuell aktivierbar, um ein für den jeweiligen Anwendungsfall optimiertes Speichervolumen bereitzustellen. Beispielsweise ist es möglich, die einzelnen Speichersegmente (60) jeweils mit einem Speichervolumen von 0,1 l zu versehen. Eine Aktivierung kann manuell über Absperrventile oder elektrisch gesteuert erfolgen.

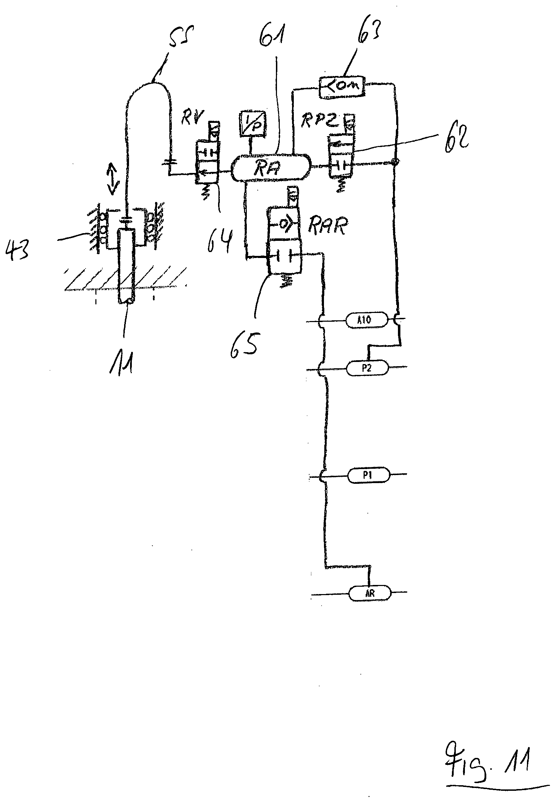

Gemäß der Ausführungsform in Fig. 11 wird verbrauchte Blasluft (AR) über ein Rückführventil (65) einem Vorratsbehälter (61) zugeführt. Der Vorratsbehälter (61) dient als Ausgleichsspeicher, da die Zuführung und die Entnahme der verbrauchten Blasluft nicht zeitlich synchron erfolgt. Der Vorratsbehälter (61) ist über ein Steuerventil (62) mit einer Blasdruckversorgung verbunden. Dies kann beispielsweise die Blasdruckversorgung für den höheren Blasdruck sein. Funktionell entspricht das Steuerventil (62) somit dem Ventil (52) gemäß Fig. 10. Das Steuerventil (62) kann von einem Rückschlagventil (63) überbrückt sein, das geschlossen ist, wenn im Vorratsbehälter (61) ein niedrigerer Druck als in der angeschlossenen Blasdruckversorgung herrscht.

Der Vorratstank (61) ist über ein Spülventil (64) an die hohle Reckstange (11) angeschlossen. Die Verbindung der Reckstange (11) mit dem Spülventil (64) erfolgt vorzugsweise über den Schlauch (55).

Im Gegensatz zur Ausführungsform in Fig. 10, gemäß der über die Ventile (56, 57) der Blasdruck zur Behälterformung zugeführt wird, erfolgt über das Steuerventil (62) in Fig. 11 die Zufuhr von Druckgas zur Durchführung des Spülvorganges entsprechend der Funktion des Einlaßventils (52) in Fig. 10. Das Rückführventil (58) gemäß Fig. 10 dient zur Ableitung von verbrauchtem Blasgas aus dem Behälter (2) und das Rückführventil (65) gemäß Fig. 11 zur Steuerung der Verwendung von verbrauchtem Blasgas für die Spülung des fertig geblasenen Behälters (2).

## Patentansprüche

1. Verfahren zur Blasformung von für die Abfüllung von heißen Flüssigkeiten vorgesehenen Behältern (2), bei dem ein Vorformling (1) nach einer thermischen Konditionierung innerhalb einer im Bereich einer Blasstation (3) angeordneten, eine Temperatur oberhalb einer Umgebungstemperatur aufweisenden Blasform (4) durch Blasdruckeinwirkung in den Behälter (2) umgeformt wird sowie bei dem Blasgas durch ein Anschlußelement (10) hindurch in einen Innenraum des Vorformlings (1) eingeleitet wird und bei dem nach der Blasformung ein Spülgas durch den Innenraum des Behälters (2) hindurchgeleitet wird, und bei dem eine Mehrzahl von Blasstationen (3) verwendet werden, wobei für mindestens eine der Blasstationen (3) mindestens ein Teil der benötigten Menge an Spülgas in einem nur dieser Blasstation (3) zugeordneten Speichervolumen bevorratet wird, **dadurch gekennzeichnet, dass** ein Speicher (48) für das Speichervolumen über ein separates Kühlmedium gekühlt wird.

2. Verfahren nach Anspruch 1, **dadurch gekennzeichnet, dass** eine mindestens teilweise Befüllung des Speichervolumens mit dem Spülgas während der Durchführung des Blasvorganges durchgeführt wird.

3. Verfahren nach Anspruch 1 oder 2, **dadurch gekennzeichnet, dass** die Befüllung des Speichervolumens mindestens teilweise durch eine Strömungsverbindung des Speichervolumens mit einem Innenraum des Behälters (2) hindurch erfolgt.

4. Verfahren nach einem der Ansprüche 1 bis 3, **dadurch gekennzeichnet, dass** mindestens ein Teil des Speichervolumens über ein Einlaßventil (52) mit Druckgas gefüllt wird.

5. Verfahren nach einem der Ansprüche 1 bis 4, **dadurch gekennzeichnet, dass** sowohl eine Einspeisung von Druckgas in das Speichervolumen als auch eine Ableitung von Druckgas aus dem Speichervolumen über jeweils mindestens ein Ventil (52, 54) gesteuert wird.

6. Verfahren nach einem der Ansprüche 1 bis 5, **dadurch gekennzeichnet, dass** das Spülgas seitlich durch eine Wandung einer Reckstange (11) hindurch in einen Innenraum (41) der Reckstange (11) eingeleitet wird.

7. Verfahren nach einem der Ansprüche 1-5, **dadurch gekennzeichnet, dass** das Spülgas der Reckstange (11) unter Verwendung eines Schlauches (55) zugeführt wird.

8. Vorrichtung zur Blasformung von für die Abfüllung von heißen Flüssigkeiten vorgesehenen Behältern (2), die mindestens zwei Blasstationen (3) mit mindestens jeweils einer eine Temperatur oberhalb einer Umgebungstemperatur aufweisende Blasform (4) aufweist, sowie bei der sich ein Strömungsweg für ein Blasgas zur Blasformung der Behälter (2) durch ein Anschlußelement (10) hindurch erstreckt und bei der die Blasstationen (3) an eine Einrichtung zur Zuführung eines Spülgases angeschlossen sind, wobei mindestens eine der Blasstationen (3) mit einem nur dieser Blasstation (3) zugeordneten Speicher (48) für mindestens einen Teil des Spülgases verbunden ist, **dadurch gekennzeichnet, dass** der Speicher (48) mit einer Kühlung versehen ist, indem er mit einem separatem Kühlmedium versorgt wird.

9. Vorrichtung nach Anspruch 8, **dadurch gekennzeichnet, dass** der Speicher (48) über ein Einlaßventil (52) mit einer Druckgasquelle (53) verbunden ist.

10. Vorrichtung nach Anspruch 8 oder 9, **dadurch gekennzeichnet, dass** der Speicher (48) über ein Auslaßventil (54) mit einem Innenraum des Behälters (2) verbindbar ist.

11. Vorrichtung nach einem der Ansprüche 8 bis 10, **dadurch gekennzeichnet, daß** der Speicher (48) als ein Vorratsbehälter (61) für verbrauchte Blasluft ausgebildet ist.

12. Vorrichtung nach einem der Ansprüche 8 bis 11, **dadurch gekennzeichnet, daß** die Zuführung für das Spülgas mindestens abschnittweise als eine hohle Reckstange (11) ausgebildet ist.

13. Vorrichtung nach Anspruch 12, **dadurch gekennzeichnet, daß** die Reckstange (11) über einen Schlauch (55) mit dem Speicher (48) verbunden ist.

## Claims

1. A method for blow-moulding containers (2) provided for the bottling of hot liquids, in the case of which a preform (1) is deformed into the container (2) after a thermal conditioning within a blow mould (4), which is arranged in the area of a blowing station (3) and has a temperature above an ambient temperature, under the effect of blowing pressure, and in the case of which blowing gas is introduced through a connecting element (10) into an interior of the preform (1), and in the case of which a rinsing gas is guided through the interior of the container (2) after the blow moulding, and in the case of which a plurality of blowing stations (3) is used, wherein for at least one of the blowing stations (3) at least a portion of the required quantity of rinsing gas is stored in a storage volume assigned only to this blowing station (3), **characterised in that** a storage (48) for the storage volume is cooled via a separate cooling medium.

2. The method according to claim 1, **characterised in that** an at least partial filling of the storage volume with the rinsing gas is carried out while the blowing process is carried out.

3. The method according to claim 1 or 2, **characterised in that** the filling of the storage volume takes place at least partially through a flow connection of the storage volume with an interior of the container (2).

4. The method according to any one of claims 1 to 3, **characterised in that** at least a portion of the storage volume is filled with compressed gas via an inlet valve (52).

5. The method according to any one of claims 1 to 4, **characterised in that** a feeding of compressed gas into the storage volume as well as a discharge of compressed gas out of the storage volume is in each case controlled via at least one valve (52, 54).

6. The method according to any one of claims 1 to 5, **characterised in that** the rinsing gas is introduced laterally through a wall of a stretching rod (11) into an interior (41) of the stretching rod (11).

7. The method according to any one of claims 1-5, **characterised in that** the rinsing gas is fed to the stretching rod (11) by using a hose (55).

8. A device for blow moulding containers (2) provided for the bottling of hot liquids, which has at least two blowing stations (3) each comprising at least one blow mould (4) having a temperature above an ambient temperature, and in the case of which a flow path for a blowing gas for blow moulding the containers (2) extends through a connecting element (10), and in the case of which the blowing stations (3) are connected to an apparatus for feeding a rinsing gas, wherein at least one of the blowing stations (3) is connected to a storage (48), which is assigned only to this blowing station (3), for at least a portion of the rinsing gas, **characterised in that** the storage (48) is provided with a cooling, **in that** it is supplied with a separate cooling medium.

9. The device according to claim 8, **characterised in that** the storage (48) is connected to a compressed gas source (53) via an inlet valve (52).

10. The device according to claim 8 or 9, **characterised in that** the storage (48) can be connected to an interior of the container (2) via an outlet valve (54).

11. The device according to any one of claims 8 to 10, **characterised in that** the storage (48) is formed as a reservoir (61) for spent blowing air.

12. The device according to any one of claims 8 to 11, **characterised in that** the feed for the rinsing gas is formed at least in some sections as a hollow stretching rod (11).

13. The device according to claim 12, **characterised in that** the stretching rod (11) is connected to the storage (48) via a hose (55).

## Revendications

1. Procédé de moulage par soufflage de récipients (2) destinés à être remplis de liquides chauds dans le cadre duquel une préforme (1), après un conditionnement thermique à l'intérieur d'un moule de soufflage (4) agencé dans la zone d'une station de soufflage (3) et présentant une température supérieure à une température ambiante, est transformée en récipient (2) sous l'action d'une pression de soufflage, et dans le cadre duquel un gaz de soufflage est introduit à travers un élément de raccordement (10) dans un espace intérieur de la préforme (1) et un gaz de rinçage est conduit à travers l'espace intérieur du récipient (2) après son moulage par soufflage, et lequel utilise une pluralité de stations de soufflage (3), une partie au moins de la quantité de gaz de rinçage nécessaire pour l'une au moins des stations de soufflage (3) étant stockée sous forme d'un volume de stockage affecté uniquement à cette station de soufflage (3), **caractérisé en ce qu'**un réservoir (48) pour le volume de stockage est refroidi par un agent de refroidissement séparé.

2. Procédé selon la revendication 1, **caractérisé en ce qu'**un remplissage au moins partiel du volume de stockage du gaz de rinçage est effectué pendant que le processus de soufflage est en cours.

3. Procédé selon la revendication 1 ou 2, **caractérisé en ce que** le remplissage du volume de stockage a, partiellement au moins, lieu par une communication d'écoulement entre le volume de stockage et un espace intérieur du récipient (2).

4. Procédé selon l'une des revendications 1 à 3, **caractérisé en ce qu'**une partie au moins du volume de stockage est remplie de gaz comprimé par une valve d'admission (52).

5. Procédé selon l'une des revendications 1 à 4, **caractérisé en ce qu'** une adduction de gaz comprimé dans le volume de stockage ainsi qu'une évacuation de gaz comprimé hors du volume de stockage sont respectivement commandées par au moins une valve (52, 54).

6. Procédé selon l'une des revendications 1 à 5, **caractérisé en ce que** le gaz de rinçage est introduit latéralement par une paroi d'une barre d'étirage (11) dans un espace intérieur (41) de la barre d'étirage (11).

7. Procédé selon l'une des revendications 1 à 5, **caractérisé en ce que** le gaz de rinçage est introduit dans la barre d'étirage (11) au moyen d'un tuyau (55).

8. Dispositif de moulage par soufflage de récipients (2) destinés à être remplis de liquides chauds, présentant au moins deux stations de soufflage (3) avec respectivement au moins moule de soufflage (4) présentant une température supérieure à une température ambiante, et doté d'une voie d'écoulement pour un gaz de soufflage destiné au moulage par soufflage des récipients (2) s'étendant à travers un élément de raccordement (10) et dont les stations de soufflage (3) sont branchées sur un dispositif d'adduction d'un gaz de rinçage, l'une au moins des stations de soufflage (3) étant raccordée à un réservoir (48) contenant une partie au moins du gaz de rinçage et affecté uniquement à cette station de soufflage (3), **caractérisé en ce que** le réservoir (48) est doté d'un système de refroidissement alimenté par un agent de refroidissement séparé.

9. Dispositif selon la revendication 8, **caractérisé en ce que** le réservoir (48) est relié à une source de gaz comprimé (53) par une valve d'admission (52).

10. Dispositif selon la revendication 8 ou 9, **caractérisé en ce que** le réservoir (48) peut être relié à un espace intérieur du récipient (2) par une valve de sortie (54).

11. Dispositif selon l'une des revendications 8 à 10, **caractérisé en ce que** le réservoir (48) forme un réservoir (61) pour l' air de soufflage usé.

12. Dispositif selon l'une des revendications 8 à 11, **caractérisé en ce que** le conduit d'adduction de gaz de rinçage est, sur une partie au moins de son étendue, réalisé sous forme d'une barre d'étirage (11) creuse.

13. Dispositif selon la revendication 12, **caractérisé en ce que** la barre d'étirage (11) est reliée au réservoir (48) par un tuyau (55).
